# EUROPEAN PATENT SPECIFICATION

(11) **EP 2 993 820 B1**
(45) Date of publication and mention of the grant of the patent: **14.11.2018**
(21) Application number: 14306375.8
(22) Date of filing: 08.09.2014
(51) Int. Cl.: H04L 12/14

(54) **Efficient session charging over Ro diameter interface**
Effizientes Sitzungsaufladen über Diameterschnittstelle Ro
Chargement efficace de session sur interface diamètre Ro

(43) Date of publication of application: 09.03.2016
(73) Proprietor: Alcatel Lucent, 91620 Nozay (FR)
(72) Inventor: Singh, Paras, 122002 GURGAON (IN); Rustagi, Saket, 110091 Delhi (IN)
(74) Representative: Mouney, Jérôme

(56) References cited:
- EP-A1- 1 876 808
- WO-A1-2014/072140
- US-A1- 2011 161 216

## Description

### FIELD OF THE INVENTION

The present invention pertains to the management for session charging for a service associated with a communication established by a user terminal.

### BACKGROUND

The document 3GPP TS32.299 defines a Ro interface for real-time charging between a Charging Trigger Function (CTF) module and an Online Charging System (OCS) module.

Trigger and re-authorization functions define events that the CTF module must monitor while delivering a service. Whenever such an event takes place-for example, a change of location or a change in quality of service-the CTF module must trigger a reauthorization for the OCS module in order to adapt the service's charging.

The OCS module monitors the delivery of a service by means of a Diameter session, during which charging is performed by reserving units. If, during the delivery of a service, a change takes place that may influence rates, the CTF module must produce a message to reserve new units with updated conditions.

Currently, the Diameter Ro protocol does not provide a mechanism in case of VoIP session charging, for OCS to commit/reserve time units without these being initiated by Diameter Client. So, in a typical long VoIP session, Diameter Client must send several CCR-U (Credit Control Request Update) messages to ask OCS to commit/reserve Time units. After diameter session initialization using CCR-I (Credit Control Request Initial), Diameter Credit Control (CC) Client will have to ask for more Time units and commit used ones through several CCR-U messages towards OCS. This will lead to increased number of requests towards Server and hence increase load on network.

US 2011/161216 discloses a credit control charging system that receives a request for service units associated with a charging session, determines at least one charging session related parameter, grants service units based on the at least one charging session related parameter, and forwards an indication of the granted service units to the session control module for return to the client or service element.

WO 2014/072140 discloses a method for decreasing the number of requests for granting service units, wherein the requests are generated by a charging trigger module, CTM, towards an online charging system, OCS. The method comprises determining a previous actual usage parameter associated with a subscriber, wherein the previous actual usage parameter is indicative of previous allocation of the network resources made to the subscriber, and retrieving a previous expected usage parameter associated with subscriber, wherein the previous expected usage parameter is indicative of expected usage of the network resources made by the subscriber. A current expected usage parameter associated with subscriber for current allocation of network resources is computed based on the previous actual and expected usage parameters and further the network resources are allocated based on the computed current expected usage parameter of the associated subscriber.

EP1876808 discloses a method for charging control reducing signalling for call reports in an electronic communications network, such as a telecommunications network.

### SUMMARY

The present invention defines a method according to claim 1, a server according to claim 5 and a computer program according to claim 6. Further embodiments are set forth in the dependent claims 2-4.

Advantageously, the invention offers an additional feature to the telecommunication network, allowing a reduced message exchange between CC Client (the network element), and CC Server for VoIP session charging, resulting in optimized network usage and less load on OCS enabling the small operators to deploy the low cost solutions.

In an embodiment, the server terminates the session by reporting an error using Abort Session Request (ASR) message with the exact cause of session termination request.

In an embodiment, the server sends a heartbeat regularly at a given time interval since reception of the request or of the last send of heartbeat.

In an embodiment, said given time interval is greater than the reserved given amount of time units.

The present invention and the benefits thereof shall be better understood upon examining the description below, which makes reference to the attached figures, in which:
- FIG. 1 is a schematic block diagram of a communication system according to one embodiment of the invention for efficient session charging for the delivery of a service; and
- FIG. 2 is an algorithm of a method for efficient session charging for the delivery of a service according to one embodiment of the invention.

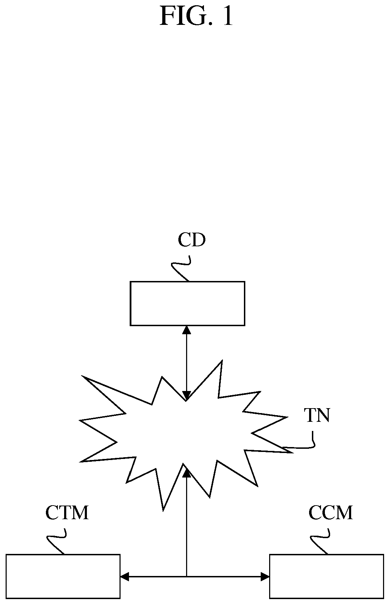

With reference to FIG. 1, a communication system according to the invention comprises a telecommunications network TN, a communication device CD, a charging trigger module CTM and a charging control module CCM.

In the remainder of the description, the term module may designate a device, a software program, or a combination of computer hardware and software, configured to execute at least one particular task.

The telecommunication network TN may be a wired or wireless network, or a combination of wired and wireless networks.

The communication device CD is capable of establishing a communication within a telecommunications network TN, for example with another user terminal. A communication device CD may, for instance, be a landline or mobile telephone, an electronic telecommunication device or object that is personal to the user and which may be a personal digital assistant (PDA) or a smartphone or a tablet, capable of being connected to an access terminal of a public wireless local area network (WLAN), or a wireless local area network that complies with one of the 802.1 x standards, or a medium-range network using the Worldwide Interoperability for Microwave Access (WiMAX) protocol.

The charging trigger module CTM and the charging control module CCM communicate with one other over the telecommunications network TN, of the Internet type. In one variant, the charging trigger module CTM and the charging control module CCM communicate with one other over a local area network or over specialized lines through the network TN.

The charging trigger module CTM and the charging control module CCM may respectively be implemented in different servers, such as application servers.

A particular functionality of the charging trigger module CTM in normal operation is to ensure that the service is delivered with the assistance of service units authorized by the charging control module CCM, which it regularly triggers in order to do so.

A particular functionality of the charging control module CCM in normal operation is to determine an authorized number of service units for delivering the service, and to transmit an answer containing that authorized number of service units to the charging trigger module CTM. To that end, the module CCM may determine a rate associated with the account or sub-account to be used to charge the service, and may determine the authorized number of service units based on the rate and on the number of service units remaining in the account or sub-account.

According to one embodiment of the invention that will be referred to throughout the remainder of the description, the telecommunication network TN is a packet network connected to an IP Multimedia Subsystem (IMS) network.

It is assumed that the user terminal is capable of communicating through the telecommunications network TN connected to the IMS network, for example with another terminal, using communication compliant with the Session Initiation Protocol (SIP). For example, the communication corresponds to an exchange of multimedia flows regarding audio and/or video content, or instant messages. The communication established by the user terminal may also be a communication with a service server, such as a web server or multimedia content server.

The user's profile, containing the services to which that user has subscribed, is saved in a Home Subscriber Server (HSS) server that manages a database particularly containing users' identities, registration information, access parameters, and information needed to invoke the services that the users have subscribed to. In one implementation, the HSS server interacts with other entities of the IMS network using the Diameter protocol.

The control of a communication initiated by the terminal is performed within the IMS network, particularly by three Call State Control Function (CSCF) control entities: the entities Proxy CSCF (P-CSCF), Interrogating CSCF (I-CSCF), and Serving-CSCF (S-CSCF).

The entity P-CSCF is the first point of contact in the IMS network, and its address is discovered by the user terminal when a Packet Data Protocol (PDP) context is activated to exchange SIP messages.

The entity I-CSCF communicates with the entity P-CSCF and with the HSS server to assign the entity S-CSCF to the user based on the user's profile saved in the HSS server.

The entity S-CSCF is in charge of controlling the communication session established by the user terminal and invoking the services to which the user is subscribed.

The charging trigger module CTM queries the charging control module CCM for units to be consumed during the delivery of a service. The charging trigger module CTM and the charging control module CCM communicate with one another, for example, by means of the Diameter Ro protocol.

The charging control module CCM may be included in an online charging system (OCS), which may be a server located elsewhere in the IMS network.

The charging trigger module CTM may be included in a network element, such as an application server or Gateway GPRS Support Node (GGSN) gateway. For example, the charging trigger module CTM implements a Charging Trigger Function (CTF), which is a central point for collecting relevant information about charging events in the network and monitoring the communication's use of network resources.

The network element, in which is included the charging trigger module CTM, is capable of generating charging events while monitoring the communication's use of network resources.

The charging control module CCM determines the present price of a current communication based on a set of parameters and the values of those parameters associated with the price.

Usually, for VoIP (Voice over IP) session charging, CC Client does not explicitly ask for X time units from CC Server, which means the request sent from the charging trigger module CTM to the charging control module CCM does not contain an amount of requested time units. Instead, a Centralized Unit Determination is used, according to which the charging control module CCM determines the number of non-monetary units that a certain service user can consume based on a service identifier received in a request CCR (Credit Control Request) from the charging trigger module CTM.

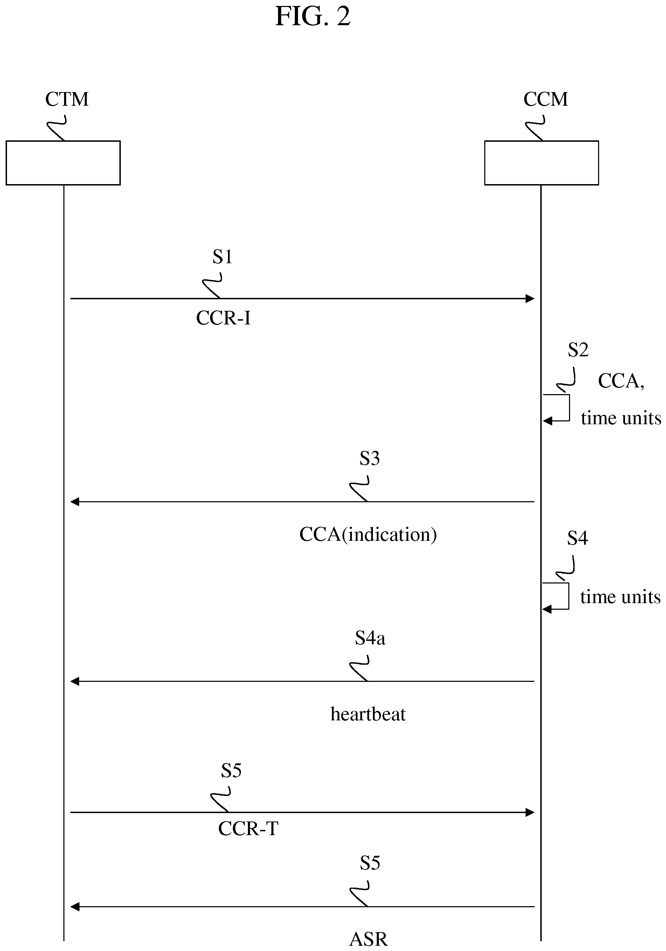

With reference to FIG. 2, a method for efficient session charging for the delivery of a service according to one embodiment of the invention comprises steps S1 to S5 executed within the communication system.

The method is described below with reference to a telecommunication network TN connected to an IMS network as an example.

In step S1, the communication device CD establishes a communication within the network TN, for example with a media server. The terminal transmits a communication session initiation message to the charging trigger module CTM. This message is, for example, an "INVITE" message, and particularly contains an identifier of the type of communication requested by the user, which corresponds, for example, to a session or a video session. The charging trigger module CTM identifies the user's profile and the type of service related to the communication. The module CTM transmits a Credit Control Request Initial (CCR-I) to the charging control module CCM to request authorization to use the service related to the communication established by the communication device CD.

In step S2, the charging control module CCM is able to reserve X time units in one slice and checks if use of X time units is authorized.

If use of X time units is authorized, the charging control module CCM produces an answer CCA (Credit Control Answer) that does not contain the amount of granted service units (GSUs) but only contain an indication that communication session can go ahead and that the charging control module CCM will take care of regular reserve and commit of time units.

For example, the answer CCA contains the following information:

```
 "Multiple-Services-Credit-Control
        Result-Code // Indicating successful initial reservation
        Self-Supervision 1 // Indicates that CC client does not need to send CCR-U
                                 // for usage reporting and new reservation
        Heartbeat-Interval Th // shapes the healtcheck mechanism for the session"
```

In step S3, the charging control module CCM transmits the answer CCA to the charging trigger module CTM.

In step S4, after X time units since last reservation, the charging control module CCM commits X time units and reserves a new slice of X time units.

Step S4 is repeated while the communication session goes on.

In a step S4a, the charging control module CCM sends a heartbeat regularly at a given time interval, like a given amount of seconds, since reception of the request CCR-I or of the last send of heartbeat using a Heartbeat-Request message. An acknowledge is received through a Heartbeat-Answer message from the charging trigger module CTM. If no acknowledge is received, the charging control module CCM assumes that the charging trigger module CTM is down and terminates the session at its end.

Thus the charging control module CCM sends a heartbeat at every time interval of said given amount of seconds, said time interval being greater than the reserved X time units.

The Heartbeat-Request message can serve the purpose of informing the charging trigger module CTM that the charging control module CCM is alive.

To cater with a scenario where the charging control module CCM might go down, the charging trigger module CTM has to wait for the next Heartbeat-Request message during said time interval plus an extra short time, failing which the charging trigger module CTM assumes that the charging control module CCM is down and terminates the session at its end.

For example, the Heartbeat-Request message and the Heartbeat-Answer message are under the following form:

```
 "<Heartbeat-Request> ::= < Diameter Header: XXX, REQ, PXY >
        < Session-Id >
        { Origin-Host }
        { Origin-Realm }
        [Service-Identifier]
        [Rating-Group]"
        "<Heartbeat-Answer> ::= < Diameter Header: XXX, PXY >
        < Session-Id >
        { Origin-Host }
        { Origin-Realm }
        [Service-Identifier]
        [Rating-Group]"
```

To cater to multiple MSCC scenario, the heartbeat messages contains the parameters [Service-Identifier] and [Rating-Group].

In step S5, the communication session is terminated by either the charging control module CCM or the charging trigger module CTM.

The charging trigger module CTM terminates the communication session through a CCR-Termination. The charging control module CCM terminates the communication session by reporting an error using Abort Session Request (ASR) message with the exact cause of session termination request by OCS indicated through Result-Code AVP. The message ASR gets acknowledged by an Abort Session Answer (ASA) message from the charging trigger module CTM.

The control credit answer contains an AVP (Attribute-Value Pair) of type Enumerated. For a Multiple Service Credit Control the AVP provides indication that during session based charging, the charging trigger module CTM does not need to send regular intermediate requests for usage reporting and new reservation and that a heartbeat message will be sent at regular time interval. The AVP is used in context of VoIP session charging for reduced message flows.

The following value can be defined:

```
 SELF-SUPERVISION-ACTIVATED 1
```

Also the AVP includes the "Self-Supervision" parameter:

```
 "<Multiple-Services-Credit-Control> ::= < AVP Header: 456 >
                                         [Self-Supervision]
                                         [Heartbeat-Interval]
                                         [Granted-Service-Units]
```

The invention described here relates to a method and a server for efficient session charging of a communication. According to one implementation of the invention, the steps of the invention are determined by the instructions of a computer program incorporated into the server. The program comprises program instructions which, when said program is loaded and executed within the server, carry out the steps of the inventive method.

Consequently, the invention also applies to a computer program, particularly a computer program on or within an information medium, suitable to implement the invention. This program may use any programming language, and be in the form of source code, object code, or intermediate code between source code and object code, such as in a partially compiled form, or in any other form desirable for implementing the inventive method.

## Claims

1. A method for efficient session charging for the delivery of a service associated with a communication established by a communication device (CD) within a telecommunications network (TN), comprising the following steps in a server included within the telecommunications network:
receiving (S1) a request (CCR-I) for session initialization coming from a network element capable of generating charging events while monitoring a communication's use of network's resources,
reserving (S2) a given amount of time units in one slice,
generating (S2) an answer (CCA) that does not contain an amount of granted service units and that contains an indication that the session can continue and that the server will handle regular reserve of time units, without the network element needing to send a request for usage reporting and new reservation,
sending (S3) the answer (CCA) to the network element, and
reserving a new slice of said given amount of time units, after said given amount of time units since last reservation.

2. A method according to claim 1, whereby the server terminates the session by reporting an error using an Abort Session Request (ASR) message with an exact cause of the session termination request.

3. A method according to claim 2, whereby the server sends a heartbeat regularly at a given time interval since the reception of the request (CCR-I) or of a last sending of the heartbeat.

4. A method according to claim 3, whereby said given time interval is greater than the reserved given amount of time units.

5. A server for efficient session charging for the delivery of a service associated with a communication established by a communication device (CD) within a telecommunications network (TN), the server comprising:
means (CCM) for receiving a request (CCR-I) for session initialization coming from a network element capable of generating charging events while monitoring a communication's use of network's resources,
means (CCM) for reserving a given amount of time units in one slice,
means (CCM) for generating an answer (CCA) that does not contain an amount of granted service units and that contains an indication that the session can continue and that the server will handle regular reserve of time units, without the network element needing to send a request for usage reporting and new reservation,
means (CCM) for sending the answer (CCA) to the network element, and
means (CCM) for reserving a new slice of said given amount of time units, after said given amount of time units since last reservation.

6. A computer program capable of being implemented within a server for efficient session charging for the delivery of a service associated with a communication established by a communication device (CD) within a telecommunications network (TN), said program comprising instructions which, when the program is loaded and executed within said server, carry out the following steps:
receiving (S1) a request (CCR-I) for session initialization coming from a network element capable of generating charging events while monitoring a communication's use of network's resources,
reserving (S2) a given amount of time units in one slice,
generating (S2) an answer (CCA) that does not contain an amount of granted service units and that contains an indication that the session can continue and that the server will handle regular reserve of time units, without the network element needing to send a request for usage reporting and new reservation,
sending (S3) the answer (CCA) to the network element, and
reserving a new slice of said given amount of time units, after said given amount of time units since last reservation.

## Patentansprüche

1. Verfahren zur effizienten Sitzungsverrechnung für die Bereitstellung eines Dienstes in Zusammenhang mit einer Kommunikation, die von einer Kommunikationsvorrichtung (CD) innerhalb eines Telekommunikationsnetzwerks (TN) aufgebaut wird, umfassend folgende Schritte in einem Server, der in dem Telekommunikationsnetzwerk eingebunden ist:
Empfangen (S1) einer Anfrage (CCR-I) zur Sitzungsinitialisierung von einem Netzwerkelement, das fähig ist, Verrechnungsereignisse zu generieren, während eine Nutzung der Kommunikation von Ressourcen des Netzwerks überwacht wird,
Reservieren (S2) einer gegebenen Menge von Zeiteinheiten in einer Scheibe,
Generieren (S2) einer Antwort (CCA), die keine Menge von gewährten Diensteinheiten enthält und die eine Angabe dafür enthält, dass die Sitzung weitergehen kann und dass der Server eine reguläre Reserve an Zeiteinheiten bewältigen wird, ohne dass das Netzwerkelement eine Anfrage für Nutzungsberichte und eine neue Reservierung senden muss,
Senden (S3) der Antwort (CCA) an das Netzwerkelement, und
Reservieren einer neuen Scheibe von der besagten gegebenen Menge von Zeiteinheiten nach der besagten gegebenen Menge von Zeiteinheiten seit der letzten Reservierung.

2. Verfahren nach Anspruch 1, wobei der Server die Sitzung abschließt durch Melden eines Fehlers unter Verwendung einer Nachricht mit einer Sitzungsabbruchsanfrage (ASR) mit einem genauen Grund für die Sitzungsabschlussanfrage.

3. Verfahren nach Anspruch 2, wobei der Server regelmäßig einen Herzschlag in einem gegebenen Zeitintervall ab dem Empfang der Anfrage (CCR-I) oder eines letzten Sendens des Herzschlags sendet.

4. Verfahren nach Anspruch 3, wobei das besagte gegebene Zeitintervall größer ist als die reservierte gegebene Menge von Zeiteinheiten.

5. Server zur effizienten Sitzungsverrechnung für die Bereitstellung eines Dienstes in Zusammenhang mit einer Kommunikation, die von einer Kommunikationsvorrichtung (CD) innerhalb eines Telekommunikationsnetzwerks (TN) aufgebaut wird, wobei der Server umfasst:
Mittel (CCM) zum Empfangen einer Anfrage (CCR-I) zur Sitzungsinitialisierung von einem Netzwerkelement, das fähig ist, Verrechnungsereignisse zu generieren, während eine Nutzung der Kommunikation von Ressourcen des Netzwerks überwacht wird,
Mittel (CCM) zum Reservieren einer gegebenen Menge von Zeiteinheiten in einer Scheibe,
Mittel (CCM) zum Generieren einer Antwort (CCA), die keine Menge von gewährten Diensteinheiten enthält und die eine Angabe dafür enthält, dass die Sitzung weitergehen kann und dass der Server eine reguläre Reserve an Zeiteinheiten bewältigen wird, ohne dass das Netzwerkelement eine Anfrage für Nutzungsberichte und eine neue Reservierung senden muss,
Mittel (CCM) zum Senden der Antwort (CCA) an das Netzwerkelement, und
Mittel (CCM) zum Reservieren einer neuen Scheibe von der besagten gegebenen Menge von Zeiteinheiten nach der besagten gegebenen Menge von Zeiteinheiten seit der letzten Reservierung.

6. Computerprogramm, das fähig ist, in einem Server zur effizienten Sitzungsverrechnung für die Bereitstellung eines Dienstes in Zusammenhang mit einer Kommunikation, die von einer Kommunikationsvorrichtung (CD) innerhalb eines Telekommunikationsnetzwerks (TN) aufgebaut wird, implementiert zu werden, wobei das besagte Programm Anweisungen umfasst, welche, wenn das Programm geladen und in dem besagten Server ausgeführt wird, die folgenden Schritte abwickeln:
Empfangen (S1) einer Anfrage (CCR-I) zur Sitzungsinitialisierung von einem Netzwerkelement, das fähig ist, Verrechnungsereignisse zu generieren, während eine Nutzung der Kommunikation von Ressourcen des Netzwerks überwacht wird,
Reservieren (S2) einer gegebenen Menge von Zeiteinheiten in einer Scheibe,
Generieren (S2) einer Antwort (CCA), die keine Menge von gewährten Diensteinheiten enthält und die eine Angabe dafür enthält, dass die Sitzung weitergehen kann und dass der Server eine reguläre Reserve an Zeiteinheiten bewältigen wird, ohne dass das Netzwerkelement eine Anfrage für Nutzungsberichte und eine neue Reservierung senden muss,
Senden (S3) der Antwort (CCA) an das Netzwerkelement, und
Reservieren einer neuen Scheibe von der besagten gegebenen Menge von Zeiteinheiten nach der besagten gegebenen Menge von Zeiteinheiten seit der letzten Reservierung.

## Revendications

1. Procédé de facturation de session efficace pour la fourniture d'un service associé à une communication établie par un dispositif de communication (CD) dans un réseau de télécommunication (TN), comprenant les étapes suivantes dans un serveur inclus dans le réseau de télécommunication :
recevoir (S1) une demande (CCR-I) d'initialisation de session provenant d'un élément de réseau pouvant générer des événements de facturation tout en surveillant l'utilisation des ressources du réseau par une communication,
réserver (S2) une quantité donnée d'unités de temps dans une tranche temporelle,
générer (S2) une réponse (CCA) qui ne contient pas une quantité d'unités de service accordées et qui contient une indication que la session peut continuer et que le serveur prendra en charge une réservation régulière d'unités de temps, sans que l'élément de réseau ait besoin d'envoyer une demande d'établissement de rapport d'utilisation et de nouvelle réservation,
envoyer (S3) la réponse (CCA) à l'élément de réseau, et
réserver une nouvelle tranche temporelle de ladite quantité donnée d'unités de temps, après ladite quantité donnée d'unités de temps depuis la dernière réservation.

2. Procédé selon la revendication 1, le serveur interrompant la session en signalant une erreur en utilisant un message de demande d'abandon de session (ASR) avec une cause exacte de la demande d'interruption de session.

3. Procédé selon la revendication 2, le serveur envoyant un battement cardiaque régulièrement selon un intervalle de temps donné depuis la réception de la demande (CCR-I) ou d'un dernier envoi du battement cardiaque.

4. Procédé selon la revendication 3, ledit intervalle de temps donné étant supérieur à la quantité donnée réservée d'unités de temps.

5. Serveur de facturation de session efficace pour la fourniture d'un service associé à une communication établie par un dispositif de communication (CD) dans un réseau de télécommunication (TN), le serveur comprenant :
des moyens (CCM) pour recevoir une demande (CCR-I) d'initialisation de session provenant d'un élément de réseau pouvant générer des événements de facturation tout en surveillant l'utilisation des ressources du réseau par une communication,
des moyens (CCM) pour réserver une quantité donnée d'unités de temps dans une tranche temporelle,
des moyens (CCM) pour générer une réponse (CCA) qui ne contient pas une quantité d'unités de service accordées et qui contient une indication que la session peut continuer et que le serveur prendra en charge une réservation régulière d'unités de temps, sans que l'élément de réseau ait besoin d'envoyer une demande d'établissement de rapport d'utilisation et de nouvelle réservation,
des moyens (CCM) pour envoyer la réponse (CCA) à l'élément de réseau, et
des moyens (CCM) pour réserver une nouvelle tranche temporelle de ladite quantité donnée d'unités de temps, après ladite quantité donnée d'unités de temps depuis la dernière réservation.

6. Programme informatique pouvant être mis en oeuvre dans un serveur de facturation de session efficace pour la fourniture d'un service associé à une communication établie par un dispositif de communication (CD) dans un réseau de télécommunication (TN), ledit programme comprenant des instructions qui, lorsque le programme est chargé et exécuté dans ledit serveur, exécutent les étapes suivantes :
recevoir (S1) une demande (CCR-I) d'initialisation de session provenant d'un élément de réseau pouvant générer des événements de facturation tout en surveillant l'utilisation des ressources du réseau par une communication,
réserver (S2) une quantité donnée d'unités de temps dans une tranche temporelle,
générer (S2) une réponse (CCA) qui ne contient pas une quantité d'unités de service accordées et qui contient une indication que la session peut continuer et que le serveur prendra en charge une réservation régulière d'unités de temps, sans que l'élément de réseau ait besoin d'envoyer une demande d'établissement de rapport d'utilisation et de nouvelle réservation,
envoyer (S3) la réponse (CCA) à l'élément de réseau, et
réserver une nouvelle tranche temporelle de ladite quantité donnée d'unités de temps, après ladite quantité donnée d'unités de temps depuis la dernière réservation.
